Europäisches Patentamt

European Patent Office

Office européen des brevets

(11) Publication number: **0 182 512 B1**

## EUROPEAN PATENT SPECIFICATION

(45) Date of publication of patent specification: **12.08.92**　(51) Int. Cl.⁵: **H01G 7/02**

(21) Application number: **85307665.1**

(22) Date of filing: **24.10.85**

A request under Rule 88 EPC for addition of a 3rd priority claim based upon JP 69980/85 of 04.04.1985 was filed on 12.02.1986.

(54) **Electret fiber sheet and method of producing same.**

(30) Priority: **24.10.84 JP 221976/84**
**30.01.85 JP 14396/84**
**04.04.85 JP 69980/85**

(43) Date of publication of application:
**28.05.86 Bulletin 86/22**

(45) Publication of the grant of the patent:
**12.08.92 Bulletin 92/33**

(84) Designated Contracting States:
**DE FR GB IT**

(56) References cited:
**EP-A- 0 060 687**
**EP-A- 0 118 216**
**FR-A- 2 416 535**

(73) Proprietor: **TORAY INDUSTRIES, INC.**
**2, Nihonbashi-Muromachi 2-chome Chuo-ku**
**Tokyo 103(JP)**

(72) Inventor: **Ando, Katsutochi**
**Ohira 2-14-15**
**Otsu-shi Shiga-ken(JP)**
Inventor: **Ogawa, Yo**
**233-32, Minamigasa-cho**
**Kusatsu-shi Shiga-ken(JP)**
Inventor: **Togashi, Ryoichi**
**1-chome 21-6, Kibogaoka**
**Konan-cho Koga-gun Shiga-ken(JP)**

(74) Representative: **Coleiro, Raymond et al**
**MEWBURN ELLIS & CO. 2/3 Cursitor Street**
**London EC4A 1BO(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an electret fiber sheet and method of producing it.

Methods of producing an electret fiber sheet are disclosed in EP-A-0118216. In one such method, described with reference to Fig. 4 thereof, a fiber sheet is charged by a continuous process in which the sheet passes through an electric field provided by one-sided corona device. The sheet is guided through the field by a rotating metal roller which is grounded. A dielectric foil is disposed between and in contact with each of the roller and the sheet.

Known electrets are also described in US-A-3998916 and US-A-4215682. The former discloses a sheet formed from fibers prepared by cutting an electret film, while the latter discloses a sheet prepared by forming electret fibers during spinning and collecting the fibers on a conveyer.

Since they are formed into a web by dispersing electret fibers with random direction of polarization, both of these known electrets have random orientation of polarized charges in the sheet. Thus the charges are mutually weakened or offset disadvantageously. Therefore, the electric field strength of such an electret is low, and the charges therein are weakened disadvantageously with the lapse of time.

The present invention aims at providing an electret having an excellent stability which cannot be expected from conventional electrets and an ability to retain high charges over a long period of time.

Aspects of the present invention are:

1. An electret fiber sheet having polorized charges on the surface thereof, and preferably an ordered orientation of the charges across the thickness of the sheet, which sheet has a weight ratio no more than 80g/m² and a covering factor (as hereinafter defined) of at least 60%,

    (a) the total charge per unit area of the sheet being at least $5 \times 10^{-10}$ C/cm², and

    (b) the or the maximum activation energy of depolarization (as hereinafter defined) of the sheet being at least 0.5 eV.

2. A process for producing such an electret fiber sheet comprising placing a fiber sheet between a non-contact voltage-application electrode and an earth electrode confronting each other and applying a voltage to provide a field strength of at least 3kV/cm at an electric current density of at least $10^{-6}$ mA/cm², preferably from $10^{-6}$ to $10^{-2}$ mA/cm² inclusive, between both of said electrodes.

The "covering factor" is given by the equation

$$\text{Covering Factor (\%)} = [C/(B+C)] \times 100$$

wherein B is the number of light sections formed by passage of light through the sheet, and

C is the number of shaded sections formed by blockage of the light by the sheet.

As explained later, "activation energy of depolarization" is measured by plotting a graph of depolarization current against temperature. Where such a graph has only one peak defining an activation energy of depolarization, then the activation energy of depolarization is at least 0.5 eV and where the graph has more than one peak each defining a respective said activation energy of depolarization then the maximum activation energy of depolarization is at least 0.5 eV.

By a "non-contact" electrode, we mean any electrode which can be used to charge a sheet while leaving a gap between the electrode and the fiber sheet, at least some of which gap is occupied by a fluid medium such as air.

A process in accordance with the invention for producing electret fiber sheeting may be carried out continuously. In such as case, the applied voltage and current density should be as high as possible because their effects will differ in dependence upon the positions of the various parts of the continuous sheet relative to the voltage source, especially where a large earth electrode such as a metallic roller or metallic conveyor belt is used.

A supplemental material, which may be a solid block or sheet, or which may be a liquid, is placed between and in contact with each of the fiber sheet and the earth electrode. The supplemental material has a volume resistivity higher than that of the earth electrode and lower than that of the fiber sheet and, in any event, within the range $10^{-1}$ to $10^{10}$ Ω cm inclusive, preferably $10^{1}$ to $10^{8}$ Ω cm, especially $10^{2}$ to $10^{6}$ Ω cm.

The process of the invention allows the formation of an electret fiber sheet in which the charges are present deep within the interior of the sheet, are disposed in an ordered orientation across the thickness of the sheet and are retained by the sheet over a particularly long period of time so that the sheet has a particularly long life span.

Preferred embodiments of the present invention will now be described in more detail with reference to the accompanying drawings in which:

Figs. 1 and 5 show what we believe are possible patterns of distribution of polarized charges in a cross-section of an electret fiber sheet embodying this invention (though we are uncertain as to the charge distribution between the fabric surfaces). In Figs. 1 and 5, numerals refer to the following

    1. polarized charges
    2. electret sheet

Fig. 2 is a simplified illustration showing lines of electric power vectors (arrows) in the cross-section of the fiber sheet of Figs. 1 and 5.

Fig. 3 shows the distribution of polarized charges in a cross-section of a conventional electret fiber sheet.

Fig. 4 is a simplified illustration showing lines of electric power vectors in the cross-section of the conventional electret fiber sheet of Fig. 3.

Fig. 6 is a typical illustration showing equipment for measurement of the amount of polarized charges and activation energy. In Fig. 6, numerals refer to the following

    3,4. electrodes

    5. temperature controller

    6. heating oven

    7. high-sensitivity ammeter

    8. data processing unit

    9. recorder

Fig. 7 shows respective depolarization current curves for three examples of electret fiber sheet embodying this invention.

Fig. 8 is a simplified illustration showing lines of electric power vectors in a cross-section of a laminate structure comprising three layers each of an electret fiber sheet embodying this invention.

Fig. 9 is a simplified cross-sectional illustration showing a typical example of equipment for producing an electret fiber sheet embodying this invention. In Fig. 9, numerals refer to the following

    10. high voltage generator

    11. non-contact needle electrode

    12. earth electrode

    13. supplemental material

    14. earth

    15. fiber sheet

Fig. 10 shows respective curves representing the relation between surface charge density and specific resistance (i.e. volume resistivity) of opposite surfaces of a typical supplemental material for use in the equipment of Fig. 9.

Fig. 11 is a simplified cross-sectional illustration showing an alternative example of equipment to that shown in Fig. 9 for producing an electret fiber sheet embodying this invention. In Fig. 11, numerals refer to the following

    10. high voltage generator

    11. non-contact needle electrode

    13. fiber sheet

    14. earth

    16. metal container

    17. liquid electrode (supplemental material).

Fig. 12 illustrates a desired state of contact of the fiber sheet with the liquid electrode when carrying out a process embodying the invention using the equipment of Fig. 11.

Fig. 13 is a graph of depolarization current versus temperature for a conventional electret fiber sheet.

Fig. 14 is a simplified cross-sectional illustration of an equipment for measurement of surface charge density of an electret sheet. In Fig. 14, numerals refer to the following

    18. metal plate

    19. electret sheet

    20. metal plate

    21. condenser

    22. volt meter

Fig. 15 is a graph showing the relation between the efficiency with which an electret fiber sheet collects aerosol particles and the surface charge density of the electret fiber sheet.

Fig. 16 is a graph showing the relation between surface charge density of an electret fiber sheet embodying the invention and temperature.

Fig. 17 is a simplified illustration of typical equipment used for evaluating the efficiency with which an electret fiber sheet collects Escherichia coli.

Fig. 18 shows collecting efficiency for Escherichia coli of an electret fiber sheet embodying the invention as compared with that of an uncharged fiber sheet.

Fig. 19 is a graph showing respective surface charge density values of individual fiber sheets of a laminate in relation to their respective positions in the laminate and relative to the positions of non-contact and earth electrodes used to polarize the laminate; this graph shows the poor results achieved when polarizing a laminate of too high a total weight.

In this specification, the phrase "having charges on the surfaces thereof" means "having positive or negative charges on each surface thereof", as is the case in a common electret.

Though the amount of such charges in the electret of this invention is not specifically limited, too small an amount of such charges presents a problem of performance. Thus the amount of polarized charges kept in the fiber sheet is $5 \times 10^{-10}$ $C/cm^2$ or larger.

In an electret fiber sheet according to one aspect of this invention at least the maximum activation energy of depolarization is at least 0.5 eV.

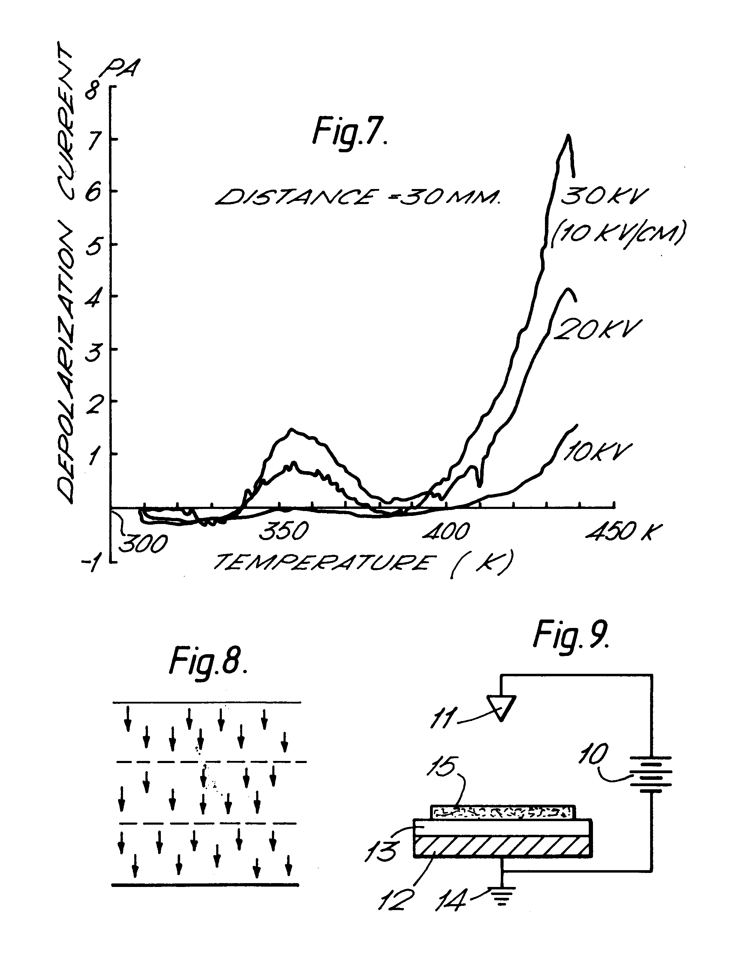

The activation energy can be determined from a graph (examples of which are illustrated in Fig. 7) showing the amount of depolarization current generated by a temperature rise. The amount of the depolarization current indicates the depth of charges trapped, and has a great influence on the life span and durability of the electret.

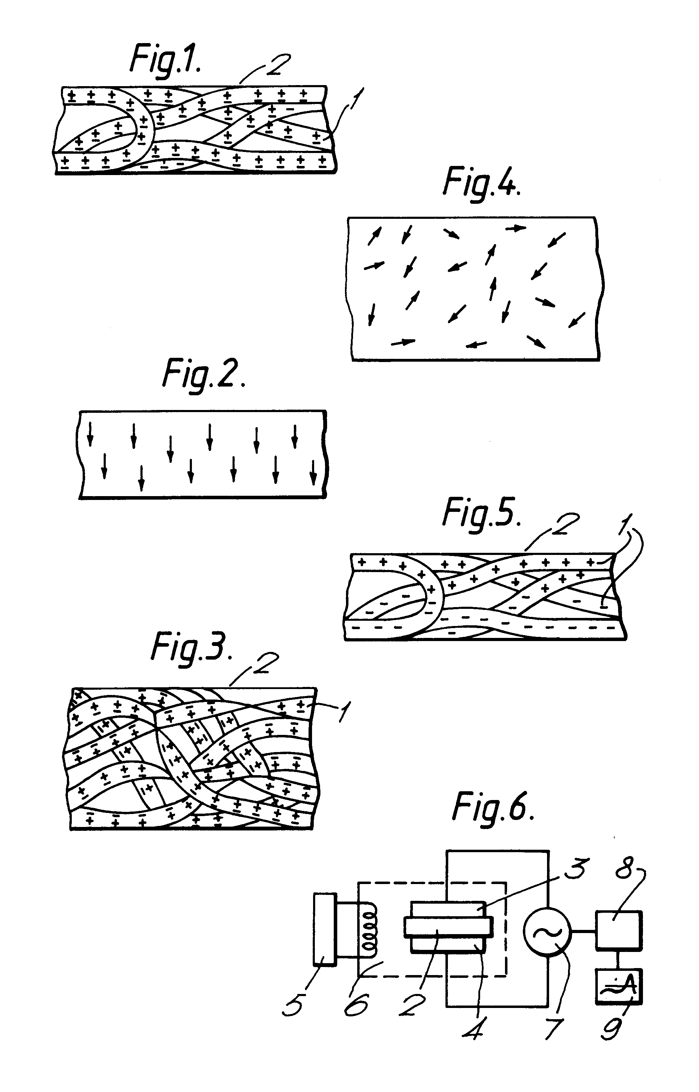

Using the equipment shown in Fig. 6, the measurement of depolarization current versus temperature can be made by strongly nipping an electret fiber sheet 2 (2 cm diameter) placed in a heating oven 6 including a temperature controller 5, connected with a high sensitivity ammeter 7. More specifically, as the temperature of the heating oven is raised at a constant rate, for example, at a rate of 5°C/min from room temperature to a temperature close to the melting point of the sheet, the charges trapped cause electric current due to depolarization thereof. The electric current is recorded by a recorder 9 operated by a data processing unit 8 to obtain a curve of electric current against temperature in various temperature zones (Fig. 7). The polarized charge per unit area is the quotient of the area under the current curve divided by the area of the specimen subjected to the measurement.

In the rising portion of each peak in the chart, the following equation is satisfied. Thus the activation energy for the depolarization can be calculated from the gradient of the straight line obtained by plotting Ln J versus 1/T as to the rising portion of each peak.

$$Ln\ J = C-(\Delta E/kT)$$

wherein J is depolarization current (Ampere), C is constant, $\Delta E$ is activation energy (eV), k is Boltzmann constant and T is temperature (K).

Supposing the plot of depolarization current against temperature shows two peaks at 92°C and 156°C respectively, activation energies associated with the respective peaks are obtained as follows:

Values of Ln J are plotted versus 1/T at 92, 87, 82, 77°C and 156, 151, 146, 141°C, respectively and the activation energies can be calculated from respective slopes and the Boltzmann constant, which is $8.6 \times 10^{-5}$ eV/K.

It is important that the activation energy be at least 0.5eV at least for one of the current peaks appearing at or above room temperature from the viewpoint of stability of the charges.

In other words, the larger the activation energy, the longer the life span of the electret. It is for this reason that an electret fiber sheet in accordance with the invention has an activation energy of at least 0.5 eV, particularly preferably at least 0.7 eV.

The higher the temperature region where a peak appears, the longer the life span of the electret. A sheet having the abovementioned temperature region at or above 50°C, preferably at or above 80°C, particularly above 130°C, shows excellent durability and stability.

Further, the electrical performance of an electret sheet is superior when the amount of polarized charges is larger. This amount corresponds to the area under the chart of depolarization current versus temperature. In a case where minus current appears, this area should be the summation of absolute values for the entire temperature range over which depolarization occurs.

A preferred electret fiber sheet in accordance with the invention additionally shows excellent heat and chemical resistances.

Another feature of the electret fiber sheet lies in the ordered orientation of polarized charges such that they produce an electrical field running generally in one direction as shown in Figs. 1, 2 and 5.

A conventional electret fiber sheet does not have such an electric field distribution, but has a distribution as shown in Fig. 3. The conventional sheet does not have the characteristic electrical properties of a sheet embodying the invention as mentioned above.

Fig. 4 is a simplified illustration showing directions of respective electric power vectors represented by vector lines (arrows) generated by polarized charges 1 kept by electret fiber filaments constituting the conventional electret sheet of Fig. 3. As is apparent from this Figure, the direction of polarization of each fiber is random and hence the vectors are offset relative to one another to provide an electric field which is weak and which rapidly dissipates with lapse of time. For this reason, this kind of electret does not have a durability for long-term use.

This orientation generally in one direction of polarized charges in an electret fiber sheet in accordance with the invention, is a factor providing the abovementioned especially excellent durability and electrical properties.

An electret sheet embodying this invention has excellent characteristics even as a single piece thereof. However, integration or lamination of a plurality of pieces of sheet provides a material having a longer life span and a better durability against external conditions.

For example, Fig. 8 illustrates lines of electric power vectors in a case where the directions of orientation of polarized charges 1 are the same in a laminate structure comprising three pieces each of an electret sheet embodying this invention. However, alternatively there may be provided a laminate structure in which the directions of vector lines are mutually reversed between respective sheets. An improvement in the durability as mentioned above of a material of the invention can be achieved by a structure having any one of these field distributions.

Fig. 9 is a rough illustration of a typical apparatus for carrying out a process for producing an electret fiber sheet of this invention. A high voltage generator 10 is connected between a non-contact type high voltage application electrode such as needle electrode 11 and an earth 14. Between the needle electrode 11 and earth 14 are disposed an earth electrode 12, a supplemental material 13 placed on the earth electrode 12 and a fiber sheet 15 having one surface in contact with the supplemental material 13 and its opposite surface facing needle electrode 11 and spaced from it.

In order to enable the electret formation to be efficiently conducted, it is important to use a fiber sheet having a weight of 80 g/m² or less. Less than 60 g/m² is more preferred. When it exceeds 80 g/m², a sufficiently compensatory charge cannot be obtained from the earth electrode, leading to lowering of the surface charge density. Moreover, glow discharge tends to occur easily. Thus, too large a weight of the fiber sheet is not preferred.

In addition, in order to obtain a electret fiber sheet having a large amount of polarized charges and a large surface charge density, it is important to use a fiber sheet having a covering factor of 60% or higher. 80% or higher is more preferred. When it is less than 60%, the amount of surface charge density cannot be large, because charges to be trapped pass through the openings between the fibers of the sheet. To make the weight of the fiber sheet small and to make the covering factor large, the thickness of the composed fibers is important. The fibers are preferably 3 denier (3.3 dtex) or less, more preferably 1 denier (1.1 dtex) or less, especially 0.5 denier (about 0.6 dtex) or less.

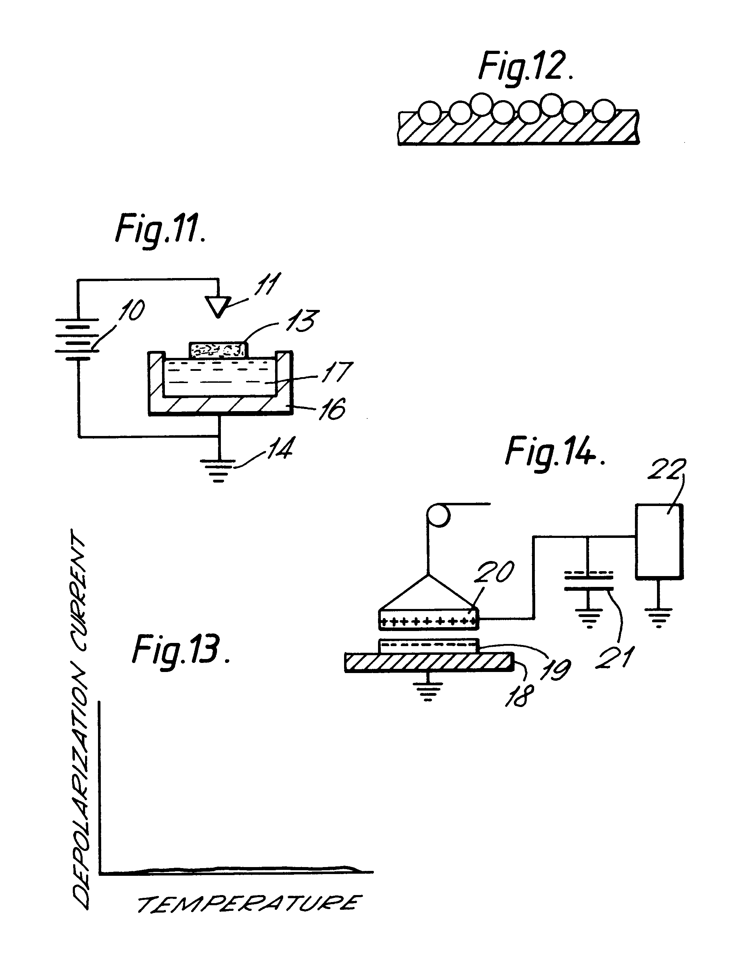

Equipment for measurement of the surface charge density is shown in Fig. 14. An electret fiber sheet 19 is placed on an earth metallic plate 18, and another metallic plate 20 is brought into contact with the electret sheet 19 to generate a counter charge in the metallic plate 20 connected to a condenser 21. By reading the voltage of the condenser 21 on volt meter 22, the surface charge density can be calculated as follows.

Surface charge density = C x V/A

C: Capacity of condenser (F)

V: Voltage (V)

A: Surface area of the electret sheet (cm²)

The surface charge density has a similar effect to the total charge density; however it can be determined much more easily than the total charge density. Therefore it is often convenient to use the former in place of the latter.

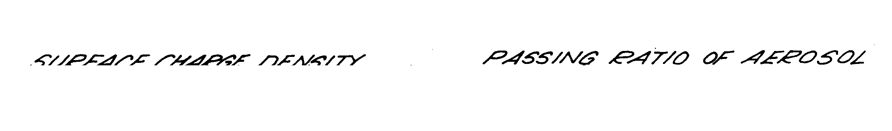

A graph of collection efficiency (i.e. "passing ratio", representing the proportional amount of aerosol particles passing through an electret fiber sheet) versus surface charge density is shown in Fig. 15. A drastic increase in the collection efficiency with increasing surface charge density can be observed.

The apparent density of the fiber sheet to be polarized is preferably at least 0.05 g/cm³, especially at least 0.1 g/cm³ in order to enable it to be highly polarized. If the apparent density is small, the thickness of the sheet becomes large and the applied charge cannot enter into the inner part of the fiber sheet because it is trapped only at the surface portion. Further, a sufficient compensatory charge cannot be obtained from the earth electrode, leading to lowering of the surface charge density.

The voltage to be applied varies depending, for example, on the kind and molecular structure of material constituting the sheet, the thickness of the sheet, the shape of the non-contact electrode and the distance between the electrodes, but should provide a field strength greater than 3kV/cm. For example, where the distance between the electrodes is 3 cm, the voltage is preferably at least 10 kV, more preferably 10-50kV, especially 25 to 40 kV. In any case, the absolute value of field strength application is preferably 3 kV/cm or higher, more preferably 5 kV/cm or higher. The distance between the voltage-application electrode and the fiber sheet is preferably at least 5 mm and may be longer, say at least 10 mm. A field strength lower than 3 kV/cm causes a difficulty in increasing the surface charge density. The effect of the applied voltage on the total charge is shown in Fig. 7, where the area under respective curves represents the total charge for each applied voltage indicated.

A distance of shorter than 5 mm causes glow discharge, leading to no increase in the surface charge density.

When a two-stage treatment is adopted in which, say a negative high voltage is applied to one surface while a positive high voltage is then applied to the reverse surface, highly polarized charges are obtained. Either order of the two step high voltage application may be applied. The negative high voltage application is more effective than the positive high voltage application. The discharge current is at least $10^{-6}$ mA/cm², preferably from $10^{-6}$ to $10^{-2}$ mA/cm² inclusive. A discharge current higher than $1 \times 10^{-2}$ mA/cm² causes glow discharge, which brings about a lowering of surface charge density. Of course, a discharge current density lower than $10^{-6}$ mA/cm² also brings about a lowering of the surface charge density. A preferred range of discharge current density values is from $10^{-5}$ to $10^{-3}$ mA/cm² inclusive.

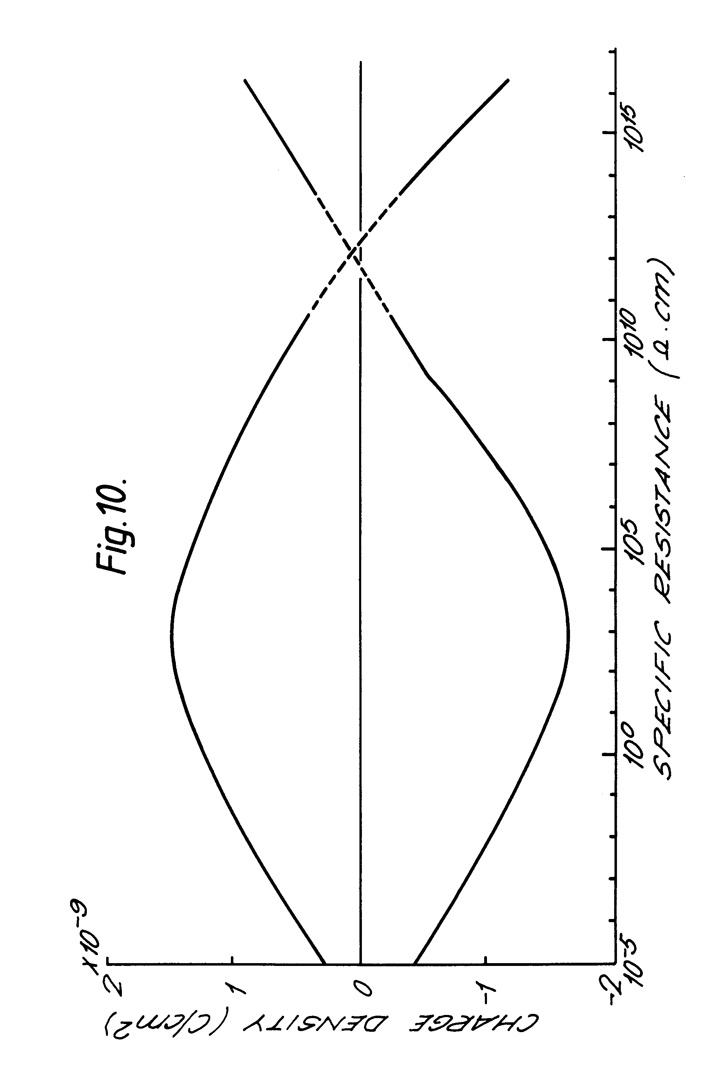

To obtain high surface charge density, it is effective to dispose a special type of supplemental material between the fiber sheet and the earth electrode. Fig. 10 shows a graph of surface charge density versus specific resistance, i.e. volume resistivity, of the supplemental material.

The respective curves correspond to surface charge densities of the front surface and the back surface, respectively (the dashed sections representing estimated values not confirmed experimentally). From Fig. 10, it can be seen that a semiconductive or dielectric material having volume resistivity of from $10^{-1}$ to $10^{10}$ Ω.cm, especially $10^{-1}$ to $10^9$ Ω.cm is effective as the supplemental material.

As the semiconductive material, either a solid or liquid material may be used. For example, a film containing minute particles such as carbon particles or metallic particles dispersed therein, paint, water or alcohol containing a small amount of soluble electroconductive material may be used.

As the dielectric material, an inorganic material or a polymer such as a polyolefin, fluororesin, polyester or polyamide may be used.

Fig. 11 shows an alternative example of equipment to that shown in Fig. 9 for carrying out a process of this invention.

A metal container 16 serving as an earth electrode and connected with ground 14 contains an electrode liquid 17 in contact with a fiber sheet 13 in a manner such that only one surface of the fiber sheet 13 is in contact with the liquid surface. In that state, the voltage generated by a high DC voltage generator 10 is applied through a non-contact high voltage electrode 11 to the fiber sheet 13 to produce an electret fiber sheet. Examples of the electrode liquid are water (which may contain a surface active agent) and organic liquids such as acetone and alcohols. The liquid serves as a supplemental material. The liquid not only prevents glow discharge between the two electrodes but also makes the contacting area with the fiber sheet 13 very large as shown in Fig. 12. For that reason, a high voltage can be supplied without glow discharge and the electric charge can be easily and deeply accepted into the fiber through the large contacting area.

In this case, it is desired to avoid infiltration of the electrode liquid up to the other surface of the fiber sheet, namely the upper surface of the fiber sheet, lest the liquid should cover the upper surface. If the upper surface of the fiber sheet is covered with the liquid, the effect of electret formation is adversely lowered. Also to avoid adverse lowering of the effect of electret formation, it is preferred to use a fiber sheet having a covering factor of 60% or higher.

The temperature of the earth electrode at the high voltage application is desirably in a range of from the glass transition temperature to the melting point of the fiber sheet. When a high voltage is applied at such a temperature, an electret fiber sheet which has a high surface charge density and a deeply trapped charge and the charge on which scarcely changes with the lapse of time can be obtained. Fig. 16 shows a relation between surface charge density and temperature at the high voltage application.

The period of voltage application is usually 5 seconds or longer, preferably 10 to 120 seconds. Of course, we can apply a voltage for a period of more than 120 seconds; however, in most cases, the sheet becomes saturated with charge and the effect is complete in less than 10 second and too long a time causes slight decrease of the surface charge density.

Examples of the non-contact electrode employable in the process of the present invention are those providing essentially a point or line voltage source such as a needle electrode and a wire electrode. As an earth electrode, materials having volume resistivity lower than $10^{-4}$ Ω.cm are preferable.

As the fiber sheet, woven or knitted fabrics can be used as can non-woven fabrics. As the woven or knitted fabrics, those made of filament yarn are more preferable than those made of spun yarn, because a large contact area with the earth electrode can be easily obtained.

As the non-woven fiber sheet, melt-blown fiber sheets are preferable, because average fiber diameters less than 10 micrometers and large cover factors can be easily obtained. Moreover, melt-blown fiber sheet is suitable for a filter for an industrial clean room because it has a high dust collection efficiency and low pressure drop.

Any material may be applicable as the fiber sheet according to the present invention, but it should have a volume resistivity of $10^{13}$ Ω.cm or higher. Examples of such a material include fibers made from any one of synthetic polymers such as polyolefins, polyesters, polycarbonate, polyfluororesins, polyacrylonitrile resins, polyamide resins and polyvinyl chloride resins; and glass and other inorganic compounds. Among them polyolefin is preferred because it has high electric resistance and has no polarity. The abovementioned fibers may have any shape so long as they have a fibrous form.

Further, the fibers which can be used in an electret sheet of this invention include those having a material covering thereon and containing an organic compound of $10^{13}$ Ω.cm or higher in volume resistivity, for example, core-sheath type fibers.

The present invention aims at providing an electret fiber sheet having a capacity to remain stable and retain a high charge for a long period, and having high chemical and heat resistances, and excellent durability as compared with conventional electret sheets. Electret fiber sheets embodying this invention find utility in a wide variety of applications as filter materials; adsorbing materials; masks; sensors such as radiation dosimeters, temperature sensors, microphones, and headphones; and medical materials such as gauzes and bone growth promotors.

Processes for producing electret fiber sheets embodying the invention will now be described in more detail with reference to the following Examples.

In these Examples, the volume resistivity was determined according to the method of JIS (Japanese Industrial Standard) C 2318 or JIS C 2525.

The covering factor was determined by counting light and shade sections (1 mm x 1 mm) of a transparent or semi-transparent graph paper placed on the enlarged (magnification was x 20) shade of a specimen (2cm x 2cm) made with enlarging projector. The covering factor was calculated according to the following equation, wherein B is the number of light sections formed by passage of light and C is the number of shade sections formed by shielding of light by the fiber:

$$\text{Covering Factor (\%)} = [C / (B + C)] \times 100$$

The apparent density of the sheet was determined by the following equation:

$$\text{Apparent Density (g/cm}^3) = D/(E \times F)$$

D:   weight per unit area $(g/cm^2)$
E:   thickness (cm)
F:   unit area $(1\ cm^2)$

The thickness was measured under a load of $50g/cm^2$.

Example 1

A melt-blown polypropylene fiber non-woven fabric having a weight of 20 $g/m^2$, average fiber thickness of 0.2 denier (about 0.2 dtex), covering factor of 99%, an apparent density of 0.129 $g/cm^3$, and a volume resistivity of $10^{16}$ Ω.cm was used as the fiber sheet for formation of an electret with equipment as shown in Fig. 9.

One iron needle electrode having a volume resistivity of $10^{-6}$ Ω.cm was used as the voltage-application electrode. A 20 cm-square iron plate was used as the earth electrode. A 20 cm-square semiconductive sheet composed of polyvinyl chloride and carbon particles uniformly dispersed therein and having a thickness of 0.5 mm and a volume resistivity of $10^4$ Ω.cm was disposed as the supplemental material between the earth electrode and the melt-blown fiber sheet. The distance between the needle electrode and the fiber sheet was set at about 30 mm. The fiber sheet was treated for 30 seconds in an atmosphere of 25°C at an applied voltage of -30 kV, i.e., an electric field strength of 10 kV/cm. The discharge current density was 3.5 x $10^{-4}$ $mA/cm^2$ during the treatment.

The obtained electret fiber sheet had peaks of the depolarization chart at 90°C and 150°C, and activation energies of the respective peaks of 0.45 eV and 0.71 eV. The total amount per unit area of depolarization charge (i.e. polarized charge as determined from a depolarization chart) was 7.2 x $10^{-10}$ $C/cm^2$, and the amount per unit area of the depolarization charge above 130°C was 3.8 x $10^{-10}$ $C/cm^2$. The surface charge density was 7.5 x $10^{-10}$ $C/cm^2$ at the front surface and -8.5 x $10^{-10}$ $C/cm^2$ at the back surface. The sheet showed almost no change of the depolarization chart after standing in air at 20°C, 60% RH for two months.

Example 2

A melt-blown polypropylene fiber sheet used in Example 1 was used.

One surface of the sheet was contacted with an electrode of water having a volume resistivity of 5 x $10^5$ Ω•cm and a voltage of -30 kV was applied with a needle electrode for 60 seconds. The depth of the water bath was 2 cm. During this treatment, the water temperature was kept at 20°C and the distance between the needle electrode and the fiber sheet was kept to 5 cm.

The electric field strength and the discharge current density were 6 kV/cm and 2.8 x $10^{-4}$ $mA/cm^2$, respectively.

In the obtained fiber sheet, the amount of electric current generated by depolarization of the polarized charges by a temperature rise was recorded. The temperatures of the peaks of the depolarization chart were 91°C and 152°C, and the activation energies were 0.51 eV and 0.79 eV. The amount of polarized charge per unit area which appeared above 130°C was 4.5 x $10^{-10}$ $C/cm^2$. This sheet showed almost no change of the depolarization chart even after leaving at 20°C, 95 %RH for two months.

Example 3

The electret fiber sheet obtained in Example 1 was turned upside down and again subjected to a further voltage of +20 kV (electric field strength of 6.6 kV/cm, discharge current density of 5 x $10^{-5}$ $mA/cm^2$) applied to the reverse surface of the sheet for 30 seconds.

Current peaks for the electret fiber sheet thus obtained were present at 92°C and 153°C. The activation energies in the respective peaks were 0.55 and 0.81 eV. The total amount per unit area of polarized charge in this sheet was 1.8 x $10^{-9}$ $C/cm^2$, and the amount per unit area of polarized charge appearing above 130°C was 5.5 x $10^{-10}$ $C/cm^2$.

After the sheet was allowed to stand at 30°C and at 95% RH for two months, the measurement of polarized charge showed substantially no change in the amount.

Example 4

Five pieces of the electret fiber sheet obtained in Example 1 were laminated in such a way that each charge polarization on those respective surfaces of every pair of pieces which were mutually adjacent were heteropolar with respect to one another (the same direction of vector lines as shown in Fig. 8).

The dust collection efficiency of this sheet was evaluated.

The evaluation was made in such a way that an air stream having a polystyrene aerosol of 0.3 $\mu$m (polystyrene uniform latex particles supplied by Dow Chemical, USA) in average particle size dispersed therein was passed through the electret fiber sheet at a speed of 2.5 cm/sec. The number of particles in the air stream was counted (Particle Counter manufactured by Hitachi, Ltd.) before and after passing the electret fiber sheet.

The electret fiber sheet of Example 1 showed a dust collection efficiency of 99.997% and pressure drop of 4.5 mm aq. In contrast, a HEPA (high efficiency particulate air) filter (sold by NIHON MUKI SENI K.K.) made of glass micro fiber, showed a dust collection efficiency of 99.987% and pressure drop 21 mm aq. In the electret fiber sheet of this example, no changes of the dust collection efficiency and the pressure drop were observed after immersion in methanol for a week or after standing in 100°C hot air for a week.

Example 5

Two pieces of the electret fiber sheet obtained in Example 1 were laminated so that the confronting surfaces of each sheet had the same polarization.

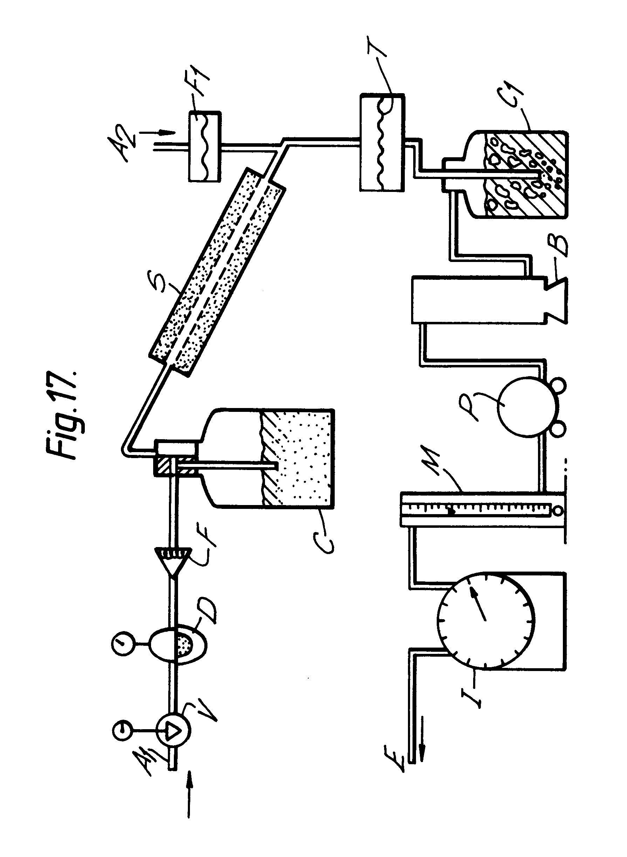

The collection efficiency of this sheet for Escherichia coli was evaluated using the apparatus shown in Fig. 17.

This apparatus comprises an air inlet A, leading to a source of Escherichia coli in a container C via a valve V, drier D and filter F, and an air inlet $A_2$ leading to a test piece T (consisting of the electret fiber sheet to be tested) via a filter F, having a weight of 100 g/m$^2$. The Escherichia coli from container C (in which they are present in an amount of 5 x 10$^8$/500 ml. of a liquid medium) are led via a silica gel column S into the air stream entering at $A_2$ and are filtered by the test piece T. Any Escherichia coli passing through the test piece are collected in a container $C_1$ containing cultivation liquid. After cultivation to provide a measurable amount, the Escherichia coli are assayed to determine the collecting efficiency. A buffer B which serves as a trap prevents cultivation liquid from progressing further while the air is exhausted by a pump P, through a flow meter M and integral flow meter I to an exit E.

An air stream (100 liters) having Escherichia coli dispersed therein was passed through the electret fiber sheet at a speed of 2.5 cm/sec and the number of Escherichia coli in the air stream passed through the electret fiber sheet was estimated by cultivation.

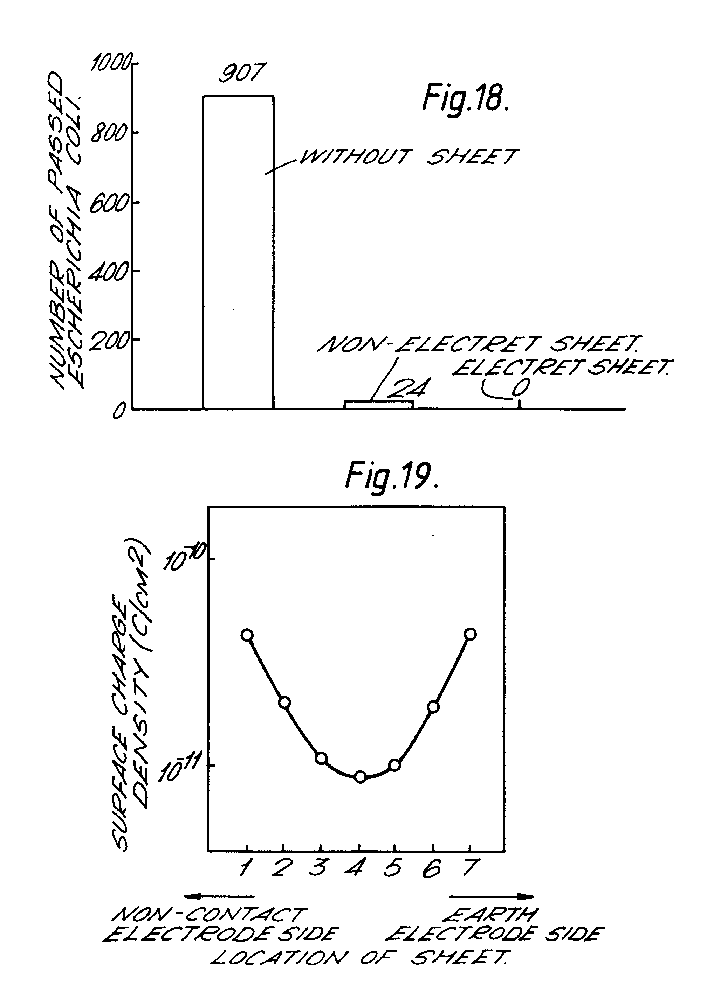

No Escherichia coli was counted when the above laminated electret fiber sheet was used. On the other hand, 24 Escherichia coli bacilli were counted when using the same melt-blown fiber sheet but having no polarized charges thereon, in place of the above sheet. 907 Escherichia coli bacilli were counted when no filter was used. These results are shown in Fig. 18.

Example 6

Polypropylene fiber (volume resistivity 10$^{16}$ $\Omega$.cm) plain fabric composed of 75 denier (82.5 dtex) multifilament yarn as warp and weft having a warp density of 101 yarns/inch (about 40 yarns/cm) and a weft density of 79 yarns/inch (about 31 yarns/cm) was used. The woven fabric had a weight of 79 g/m$^2$ and a covering factor of 98%, was composed of fiber having a denier of 0.8d (about 0.9 dtex), and had an apparent density of 0.79 g/cm$^3$. The plain fabric was polarized using the equipment shown in Fig. 9 using an applied voltage of -36 kV for a period of 40 secs. As the supplemental material, polyethylene film (100 micrometer thickness) containing metallic powder uniformly dispersed therein and having volume resistivity of 10$^6$ $\Omega$.cm was used. The electrical field strength and the discharge current density were -12 kV/cm and 3.5 x 10$^{-4}$ mA/cm$^2$, respectively. The peak temperatures of the discharge current were 91°C and 151°C and the respective activation energies were 0.35 and 0.62 eV.

Comparative Example 1

This Example illustrates the adverse effects of charging a film prior to slitting it to form a nonwoven fabric structure, as in US 3998916.

A polypropylene film was charged to provide an electret film which was thereafter cut. The resulting slit film of 32 $\mu$m in width and 10 $\mu$m in thickness was formed, with a card, into a nonwoven fabric sheet having an areal weight of 360 g/m$^2$ (outside the process of the invention) and a thickness of 6.5 mm. The depolarization current for the sheet thus obtained was measured to obtain a chart as shown in Fig. 13. This result suggested that the electric field distribution of the sheet was random. Thus, the chart had no characteristic current peaks as realized by an electret fiber sheet embodying the present invention.

The dust collection efficiency of this sheet was evaluated according to the method of Example 5. It was 99.850%. The dust collection efficiency of this sheet after its immersion in methanol for one week was 90.72%. This means that the polarized charge was not stable in this sheet.

Comparative Example 2

This Example illustrates the adverse effects of using contact electrodes, i.e. where no air gap is provided between the electrode and the fiber sheet, as in the method of JP-B-4433/74.

The melt-blown fiber sheet used in Example 1 was sandwiched between two 20 cm square polymethylmethacrylate (PMMA) plates of 5 mm thickness. The two PMMA plates were further sandwiched between two metallic electrode plates and -20 kV was charged between the two electrodes. No discharge current was observed. Though the depolarization current versus temperature was measured, the peak temperature and activation energy were not clearly measurable. The amount of depolarized charge per unit area was only $5 \times 10^{-11}$ $C/cm^2$. Further, lowering of the amount of polarized charge was observed after standing at 20°C, 65% RH for one week.

Comparative Example 3

This Example illustrates the adverse effects of using a fiber sheet laminate which is too heavy.

A non-woven sheet having weight of $140g/m^2$ was made by laminating seven non-woven sheets each having a weight of 20 $g/m^2$. The laminated non-woven sheet had an apparent density of 0.09 $g/cm^3$, covering factor of 98%, average fiber thickness of 2.5 denier (2.75 dtex) and volume resistivity of the fiber material (polypropylene) of $10^{16}$ $\Omega.cm$. Although high voltage application was attempted using this laminated non-woven sheet in the same way as Example 1, it caused glow discharge. The above experiment was repeated, changing the applied voltage so as to provide a field strength of 10 kV/cm to 6. The current density was $1.2 \times 10^{-4}$ $mA/cm^2$. The depolarization versus temperature curve showed no clear peak temperature and activation energy, and the total amount of the depolarized charge per unit area was only $6 \times 10^{-11}$ $C/cm^2$. Further, the individual sheets of the laminate were separated from one another (delaminated), and their respective surface charge densities evaluated. The total amount per unit area of polarized charge was only $1.5 \times 10^{-11}$ $C/cm^2$. The surface charges of the respective component sheets of the laminate are shown in Fig. 19.

Comparative Example 4

An electret fiber sheet was made by applying a high voltage during a melt-blow process for preparing polypropylene fibers. The distance between the needle electrode and earth electrode was 5 cm and the applied voltage was -45 kV (electric field strength: 9 kV/cm). An electret sheet was made by collecting the melt-blown fibers on a conveyer. The average fiber thickness of the fibers was 0.2 denier (about 0.2 dtex) and the weight of the sheet was 80 $g/m^2$.

The plot of depolarized charge versus temperature was similar to that of Comparative Example 1, which is shown in Fig. 13.

This process illustrates the poor results which we obtained when applying a high voltage during a melt-blow process such as that described in US-A-4215682.

**Claims**

1. An electret fiber sheet having polarized charges on the surfaces thereof, which sheet has a weight no more than 80 $g/m^2$ and a covering factor of at least 60%, which covering factor is given by the equation

   Covering Factor (%) = $[C/(B+C)]x100$

   wherein B is the number of light sections formed by passage of light through the sheet, and

   C is the number of shaded sections formed by blockage of light by the sheet, and

   where a graph of depolarization current against temperature has only one peak defining an activation energy of depolarization, then the activation energy of depolarization is at least 0.5 eV and where the said graph has more than one peak each defining a respective said activation energy of depolarization, then the maximum activation energy of depolarization is at least 0.5 eV, and the total charge per unit area of the sheet is at least $5 \times 10^{-10}$ $C/cm^2$.

2. An electret fiber sheet as claimed in claim 1 wherein the peak temperature of depolarization is at least 50°C.

3. An electret fiber sheet as claimed in claim 2, wherein the peak temperature of depolarization is at least 80°C.

4. An electret fiber sheet as claimed in any preceding claim, wherein the fiber sheet is a non-woven fiber sheet.

5. An electret fiber sheet as claimed in claim 4, wherein the non-woven fiber sheet is a melt-blown fiber sheet.

6. A process for producing an electret fiber sheet according to any preceding claim, comprising placing a fiber sheet between a non-contact voltage-application electrode and an earth electrode confronting each other, providing, in contact with the earth electrode and the fiber sheet, a supplemental material having a volume resistivity higher than that of the earth electrode and lower than that of the fiber sheet and in a range of from $10^{-1}$ to $10^{10}$ Ω.cm, and applying a voltage to provide a field strength of at least 3 kV/cm at an electric current density of at least $1 \times 10^{-6}$ mA/cm$^2$ between both of said electrodes, the fiber sheet having a weight no more than 80 g/m$^2$ and a covering factor of at least 60%, which covering factor is given by the equation

covering Factor (%) = [C/(B + C)]x100

wherein B is the number of light sections formed by passage of light through the sheet, and

C is the number of shaded sections formed by blockage of light by the sheet.

7. A process as claimed in claim 6, wherein the electric current density at which the said voltage is applied is from $1 \times 10^{-6}$ to $1 \times 10^{-2}$ mA/cm$^2$ inclusive.

8. A process as claimed in claim 6 or claim 7, wherein said supplemental material is a liquid.

9. A process as claimed in any one of claims 6 to 8, wherein said fiber sheet has an apparent density of at least 0.05 g/cm$^3$.

10. A process as claimed in any one of claims 6 to 9, which is carried out at a temperature between the glass-transition temperature and melt point of the material of the fiber sheet.

11. A process as claimed in any one of claims 6 to 10, wherein the distance between the fiber sheet and the voltage-application electrode is at least 5 mm.

12. A process as claimed in any one of claims 6 to 11, which includes the steps of
(a) placing the fiber sheet between the voltage-application and earth electrodes so that one face of the fiber sheet is brought into contact with the voltage-application electrode and the opposite face of the fiber sheet is brought into contact with the earth electrode,
(b) applying a voltage of a given polarity between the voltage-application and earth electrodes,
(c) reversing the fiber sheet so that the said one face thereof is brought into contact with the earth electrode and the said opposite face thereof is brought into contact with the voltage-application electrode, and
(d) applying a voltage of a polarity opposite to that of the said given polarity applied in step (b) between the voltage application and earth electrodes.

13. A material comprising a laminate of electret fiber sheets, each of which comprises an electret fiber sheet according to any one of claims 1 to 5.

**Revendications**

1. Feuille de fibres d'électret ayant des charges polarisées à ses surfaces, laquelle feuille a un poids ne dépassant pas 80 g/m$^2$ et un facteur de couverture d'au moins 60%, lequel facteur de couverture est donné par l'équation :

Facteur de Couverture (%) = [C/(B + C)]x100

où B est le nombre de sections de lumière formées par le passage de la lumière à travers la feuille et

C est le nombre de sections sombres formées par le blocage de la lumière à travers la feuille, et

si un graphique du courant de dépolarisation en fonction de la température n'a qu'une crête définissant une énergie d'activation de dépolarisation, alors l'énergie d'activation de dépolarisation est d'au moins 0,5 eV et lorsque ledit graphique a plus d'une crête chacune définissant une énergie respective d'activation de dépolarisation, alors l'énergie maximale d'activation de dépolarisation est d'au moins 0,5 eV et la charge totale par unité de surface de la feuille est d'au moins $5 \times 10^{-10}$ C/cm$^2$.

2. Feuille de fibres d'électret selon la revendication 1, où la température de pointe de dépolarisation est d'au moins 50°C.

3. Feuille de fibres d'électret selon la revendication 2, où la température de pointe de dépolarisation est d'au moins 80°C.

4. Feuille de fibres d'électret selon l'une quelconque des revendications précédentes, où la feuille de fibres est une feuille de fibres non tissées.

5. Feuille de fibres d'électret selon la revendication 4, où la feuille de fibres non tissées est une feuille de fibres soufflées en phase fondue.

6. Procédé de production d'une feuille de fibres d'électret selon toute revendication précédente, consistant à placer une feuille de fibres entre une électrode d'application de tension sans contact et une électrode à la terre qui se font face, à prévoir, en contact avec l'électrode à la terre et la feuille de fibres, un matériau supplémentaire ayant une résistivité en volume plus importante que celle de l'électrode à la terre et plus faible que celle de la feuille de fibres et comprise entre $10^{-1}$ et $10^{10}$ Ω.cm et à appliquer une tension pour produire une force du champ d'au moins 3 kV/cm à une densité de courant électrique d'au moins $1 \times 10^{-6}$ mA/cm$^2$ entre lesdites deux électrodes, la feuille de fibres ayant un poids ne dépassant pas 80 g/m$^2$ et un fecteur de couverture d'au moins 60%, lequel facteur de couverture est donné par l'équation

Facteur de Couverture (%) = [C/(B + C)]x100

où B est le nombre dé sections de lumière formées par le passage de la lumière à travers la feuille et
    C est le nombre de sections sombres formées par le blocage de la lumière à travers la feuille.

7. Procédé selon la revendication 6, où la densité de courant électrique à laquelle ladite tension est appliquée est comprise entre $1 \times 10^{-6}$ et $1 \times 10^{-2}$ mA/cm$^2$ inclus.

8. Procédé selon la revendication 6 ou la revendication 7, où ledit matériau supplémentaire est un liquide.

9. Procédé selon l'une quelconque des revendications 6 à 8, où ladite feuille de fibres a une densité apparente d'au moins 0,05 g/cm$^3$.

10. Procédé selon l'une quelconque des revendications 6 à 9, qui est effectué à une température entre la température de transition vitreuse et un point de fusion du matériau de la feuille de fibres.

11. Procédé selon l'une quelconque des revendications 6 à 10, où la distance entre la feuille de fibres et l'électrode d'application de tension est d'au moins 5 mm.

12. Procédé selon l'une quelconque des revendications 6 à 11, qui comprend les étapes de :
    (a) placer la feuille de fibres entre les électrodes d'application de tension et de terre de manière qu'une face de la feuille de fibres soit portée en contact avec l'électrode d'application de tension et que la face opposée de la feuille de fibres soit portée en contact avec l'électrode à la terre,
    (b) appliquer une tension d'une polarité donnée entre les électrodes d'application de tension et à la terre,
    (c) retourner la feuille de fibres de manière que sa première face soit portée en contact avec l'électrode de terre et que sa face opposée soit portée en contact avec l'électrode d'application de tension et
    (d) appliquer une tension d'une polarité opposée à celle de ladite polarité donnée appliquée à l'étape (b) entre les électrodes d'application de tension et de terre.

13. matériau comprenant un laminé de feuilles de fibres d'électret, chacune comprenant une feuille de fibres d'électret selon l'une quelconque des revendications 1 à 5.

**Patentansprüche**

1. Ein an seinen Oberflächen polarisierte Ladungen aufweisendes Elektretfaserflächengebilde, das ein Gewicht von nicht mehr als 80 g/m$^2$ und einen Bedeckungsfaktor von mindestens 60% hat, wobei der Bedeckungsfaktor gegeben ist durch die Gleichung

Bedeckungsfaktor (%) = [C/(B + C)] x 100

    wobei B die Anzahl von durch einen Durchgang von Licht durch das Flächengebilde erzeugten erhellten Abschnitten ist, und
    C die Anzahl der durch ein Abhalten von Licht durch das Flächengebilde erzeugten abgeschatteten Abschnitten ist, und
    bei dem, wenn ein Graph des Depolarisationsstromes gegen die Temperatur nur ein eine Aktivierungsenergie der Depolarisation definierendes Maximum hat, die Aktivierungsenergie der Depolarisation mindestens 0,5 ev beträgt und bei dem, wenn der genannte Graph mehr als ein jeweils eine entsprechende Aktivierungsenergie der Depolarisation definierendes Maximum hat, die maximale Aktivierungsenergie der Depolarisation mindestens 0,5 ev beträgt und die Gesamtladung pro Einheitsfläche des Flächengebildes mindestens 5 x $10^{-10}$ C/cm$^2$ ist.

2. Elektretfaserflächengebilde gemäß Anspruch 1, bei dem die Depolarisationsmaximumtemperatur mindestens 50°C ist.

3. Elektretfaserflächengebilde gemäß Anspruch 2, bei dem die Depolarisationsmaximumtemperatur mindestens 80°C ist.

4. Elektretfaserflächengebilde gemäß jedem vorhergehenden Anspruch, bei dem das Faserflächengebilde ein nichtgewebtes Faserflächengebilde ist.

5. Elektretfaserflächengebilde gemäß Anspruch 4, bei dem das nichtgewebte Faserflächengebilde ein Faserflächengebilde aus schmelzgeblasenen Fasern ist.

6. Verfahren zur Herstellung eines Elektretfaserflächengebildes gemäß jedem vorhergehenden Anspruch, bei dem ein Faserflächengebilde zwischen einer kontaktlosen Spannungszuführungselektrode und einer Erdungselektrode, die einander gegenüberstehen, in Lage gebracht wird, ein Zusatzmaterial mit einem spezifischen Volumenwiderstand höher als der der Erdungselektrode und niedriger als der des Faserflächengebildes und in einem Bereich von $10^{-1}$ bis $10^{10}$ Ω cm in Kontakt mit der Erdungselektrode und dem Faserflächengebilde vorgesehen wird, und zwischen den beiden Elektroden eine Spannung zum Erzeugen einer Feldstärke von mindestens 3 kV/cm bei einer elektrischen Stromdichte von mindestens 1 x $10^{-6}$ mA/cm$^3$ angelegt wird, wobei das Faserflächengebilde ein Gewicht von nicht mehr als 80 g/m$^2$ und einen Bedeckungsfaktor von mindestens 60% hat, welcher Bedeckungsfaktor gegeben ist durch die Gleichung

Bedeckungsfaktor (%) = [C/(B + C)] x 100

wobei B die Anzahl von durch den Durchgang von Licht durch das Flächengebilde erzeugten erhellten Abschnitten, und C die Anzahl der durch das Abhalten von Licht durch das Flächengebilde erzeugten abgeschatteten Abschnitte ist.

7. Verfahren gemäß Anspruch 6, bei dem die elektrische Stromdichte, bei der die Spannung zugeführt wird, von 1 x $10^{-6}$ bis 1 x $10^{-2}$ mA/cm$^2$ einschließlich beträgt.

8. Verfahren gemäß Anspruch 6 oder Anspruch 7, bei dem das Zusatzmaterial eine Flüssigkeit ist.

9. Verfahren gemäß einem der Ansprüche 6 bis 8, bei dem das Faserflächengebilde eine scheinbare Dichte von mindestens 0,05 g/cm$^3$ hat.

10. Verfahren gemäß einem der Ansprüche 6 bis 9, wobei dieses bei einer Temperatur zwischen der Glasübergangstemperatur und dem Schmelzpunkt des Materials des Faserflächengebildes durchgeführt wird.

11. Verfahren gemäß einem der Ansprüche 6 bis 10, bei dem die Entfernung zwischen dem Faserflächengebilde und der Spannungszuführungselektrode mindestens 5 mm beträgt.

12. Verfahren gemäß einem der Ansprüche 6 bis 11, das die Schritte enthält
(a) daß das Faserflächengebilde zwischen den Spannungszuführungs- und Erdungselektroden so in Lage gebracht wird, daß eine Seite des Faserflächengebildes mit der Spannungszuführungselektrodein Kontakt gebracht wird und die entgegengesetzte Seite des Faserflächengebildes mit der Erdungselektrode in Kontakt gebracht wird,
(b) Anlegen einer Spannung einer gegebenen Polarität zwischen den Spannungszuführungs- und Erdungselektroden,
(c) Umdrehen des Faserflächengebildes, so daß die besagte eine Seite desselben mit der Erdungselektrode in Kontakt gebracht wird, und die besagte entgegengesetzte Seite desselben mit der Spannungszuführungselektrode in Kontakt gebracht wird, und
(d) Anlegen einer Spannung einer Polarität, die zu der in Schritt (b) angelegten gegebenen Polarität entgegengesetzt ist, zwischen den Spannungszuführungs- und Erdungselektroden.

13. Ein Material enthaltend ein Laminat von Elektretfaserflächengebilden, von denen jedes ein Elektretfaserflächengebilde gemäß einem der Ansprüche 1 bis 5 umfaßt.

Fig.1.

Fig.4.

Fig.2.

Fig.5.

Fig.3.

Fig.6.

EP 0 182 512 B1

Fig.7.

DISTANCE = 30 MM.

30 KV
(10 KV/CM)

20 KV

10 KV

DEPOLARIZATION CURRENT — PA

TEMPERATURE ( K )

Fig.8.

Fig.9.

Fig.10.

EP 0 182 512 B1

Fig.12.

Fig.11.

10
11
13
17
16
14

Fig.14.

22
20
18
19
21

Fig.13.

DEPOLARIZATION CURRENT

TEMPERATURE

PASSING RATIO OF AEROSOL

SURFACE CHARGE DENSITY

Fig.17.

Fig.18.

907

WITHOUT SHEET

NON-ELECTRET SHEET.
ELECTRET SHEET.
24
0

NUMBER OF PASSED ESCHERICHIA COLI.

1000
800
600
400
200
0

Fig.19.

SURFACE CHARGE DENSITY (C/cm²)

$10^{-10}$

$10^{-11}$

1 2 3 4 5 6 7

NON-CONTACT
ELECTRODE SIDE

EARTH
ELECTRODE SIDE

LOCATION OF SHEET.